# EUROPÄISCHE PATENTSCHRIFT

(11) **EP 0 550 511 B1**
(45) Veröffentlichungstag und Bekanntmachung des Hinweises auf die Patenterteilung: **06.04.1994**
(21) Anmeldenummer: 91916557.1
(22) Anmeldetag: 26.09.1991
(51) Int. Cl.: G06K 9/34

(54) **VERFAHREN ZUR EXTRAHIERUNG VON EINZELZEICHEN AUS RASTERBILDVORLAGEN EINER GELESENEN HAND- ODER MASCHINENSCHRIFTLICHEN ZEICHENFOLGE FREIER TEILUNG**
PROCESS FOR EXTRACTING INDIVIDUAL CHARACTERS FROM RASTER IMAGES OF A READ-IN HANDWRITTEN OR TYPED SERIES OF CHARACTERS IN FREE DISTRIBUTION
PROCEDE D'EXTRACTION DE CARACTERES INDIVIDUELS D'IMAGES-ECRAN REPRESENTANT UNE SUITE LUE DE CARACTERES ECRITS A LA MAIN OU A LA MACHINE AYANT UNE DISTRIBUTION ARBITRAIRE

(30) Priorität: 27.09.1990 EP 90118613
(43) Veröffentlichungstag der Anmeldung: 14.07.1993
(73) Patentinhaber: CGK Computer Gesellschaft Konstanz mbH, D-78467 Konstanz (DE)
(72) Erfinder: LELLMANN, Wolfgang, D-7750 Konstanz (DE); MÜLLER, Xaver, D-7760 Radolfzell (DE)
(74) Vertreter: Fuchs, Franz-Josef, Dr.-Ing.
(86) Internationale Anmeldenummer: EP9101834
(87) Internationale Veröffentlichungsnummer: WO9206448

(56) Entgegenhaltungen:
- EP-A-00 475 12
- US-A-46 808 03
- PATTERN RECOGNITION, Vol. 19, No. 1, 1986, US pages 1-12; M. SHRIDAR & A. BADRELHIN: "Recognition of isolated and simple connected handwritten numerals"
- WISSENSCHAFTLICHE BERICHTE AEG TELEFUNKEN, Vol. 47, No. 3/4, 1974, BERLIN DE, pages 90-99; J. SCHURMANN: "Bildvorbereitung für die automatische Zeichenerkennung" (cited in the application)

## Beschreibung

Die Erfindung betrifft ein Verfahren zur Extrahierung von Einzelzeichen aus Rasterbildvorlagen einer gelesenen Zeichenfolge gemäß den Merkmalen des Oberbegriffs des Anspruchs 1.

Bei der automatischen Zeichenerkennung ist es im Rahmen der Rasterbildaufbereitung u.a. notwendig, als der gelesenen Zeichenfolge jeweils einem Einzelzeichen zugeordnete Segmente zu isolieren. Solange die Rasterbilder einzelner Zeichen in sich zusammenhängend und beidseitig von Weißbereichen, wie Weißspalten oder Weißwegen, begrenzt sind, bereitet die Extrahierung der Einzelzeichen keine besonderen Schwierigkeiten. Dieser "Idealfall" ist jedoch bei eng geschriebenen Hand- und Maschinenschriften nicht mehr gegeben, weil hier häufig Überlappungen und/oder Verklebungen zwischen den einzelnen Zeichen auftreten, die die Zeichentrennung wegen der nicht mehr vorhandenen Weißspalten und Weißwege erheblich erschweren, wenn nicht gar völlig unmöglich machen. Ist die Schrift nur enger gesetzt, jedoch mit fester Teilung geschrieben (gebräuchliche Maschinenschriften oder Handschrift in vorgedruckten Rasterkästchen), so können sogenannte Kammsegmentierverfahren (siehe wissenschaftliche Berichte A.E.G.-TELEFUNKEN, Band 47, Nummer 3/4, März 1974, Seiten 90 - 99, Berlin, Dr. J. Schürmann: "Bildvorbereitung für die automatische Zeichenerkennung") zur Abschätzung der Teilung und zum Finden der Segmentierspalten häufig mit Erfolg eingesetzt werden. Dies ist jedoch bei Druckschriften, die von Proportionalschriftmaschinen oder im Drucksatz hergestellt werden und ebenso bei freier Handschrift prinzipiell nicht mehr möglich, weshalb bisherige Zeichenerkennungsverfahren entsprechende Zeichenketten nicht verarbeiten können.

Das in EP 0 047 512 beschriebene statistische Verfahren erlaubt zwar prinzipiell die Trennung auch solcher Zeichenketten, ist aber bei freier Schrift nicht von ausreichener Qualität.

Schließlich ist aus "Pattern Recognition, 19/1986, No.1, Seiten 1 bis 12 - M. Shridhar and A. Badreldin: Recognition of isolated and simply connected handwritten numerals" ein Zeichentrennungsverfahren für handgeschriebene Ziffern bekannt, bei dem die Bedingung gilt, daß die Ziffern jeweils nur an einer einzigen Stelle zusammenhängen dürfen. Bei diesem Verfahren wird, gegebenenfalls unter Einbeziehung einer Konturverfolgungsstrategie, ausgehend von einer mittleren Spalte solange nach beiden Seiten gesucht, bis eine Spalte mit nur einer Durchtrennstelle gefunden ist. Diese Spalte wird als Trennspalte zur Segmentierung der beiden Ziffern verwendet.

Der vorliegenden Erfindung liegt nun die Aufgabe zugrunde, eine Extrahierung von Einzelzeichen aus Rasterbildvorlagen gelesener Hand- und Maschinenschriften auch bei überlappenden, verschachtelten oder ein- oder mehrfach verklebten Einzelzeichen zu gewährleisten.

Die Lösung dieser Aufgabe ergibt sich erfindungsgemäß durch die Merkmale des Anspruchs 1. Beim erfindungsgemäßen Verfahren wird zwischen je zwei Zeichen ein optimaler Trennweg bestimmt. Ein solcher Trennweg ist durch globale Aspekte (Position des Wegs in der Zeile) und durch lokale Aspekte (Form des Trennwegs) charakterisiert. Dementsprechend wird ein zweistufiges Verfahren angewandt. Dabei dient die erste Stufe dazu, den zu findenden Trennweg an der richtigen Spalte der Zeile zu positionieren. Zu diesem Zweck wird ein statistisches Verfahren als Mustererkennungsprozeß mit globalen Eigenschaften benutzt. Für ein derartiges Verfahren eignet sich beispielsweise eine Basis-Klassifikator-Kaskade (siehe EP-0 111 930) kombiniert mit Merkmalen des Winkelschnittanalyse-Verfahrens nach EP 0 047 512. Dieses Verfahren wird mit bekannten Zeichenkombinationen von Hand- bzw. Maschinenschriftzeichen nun so belehrt, daß es auch bei unbekannten Zeichenkombinationen allein aus den statistischen Eigenschaften der zugrundeliegenden Teil-Rasterbildzeile eine möglichst exakte Trennspalte liefert.

Dies wird nun in der 2. Stufe als Ausgangspunkt benutzt, um aus den lokalen Eigenschaften der Zeichen in der Umgebung der Trennspalte einen optimalen Trennweg zu bestimmen. Dabei gilt ein Trennweg dann als optimal, wenn er einerseits möglichst wenig Schwarzbereiche durchschneidet, sich andererseits aber auch nicht zu sehr von der Trennspalte entfernt. Ein modifiziertes Kontur-Verfolgungs-Verfahren erlaubt es, z.B., in einer Umgebung der Trennspalte die einzelnen Zeichenkomponenten dem linken bzw. rechten Zeichen zuzuordnen. Sollten zusätzlich Durchschneidungen von Schwarzbereichen nötig sein, weil etwa zwei Zeichen an einer Stelle zusammenkleben, so geschieht dies an der Trennspalte. Ein optimaler Trennweg kann somit zum Teil aus "gekrümmten" Weißwegen und zum Teil aus Schwarzbereichsdurchtrennungen zusammengesetzt sein.

Vorteilhafte Weiterbildungen der Erfindung ergeben sich aus den Merkmalen der Unteransprüche.

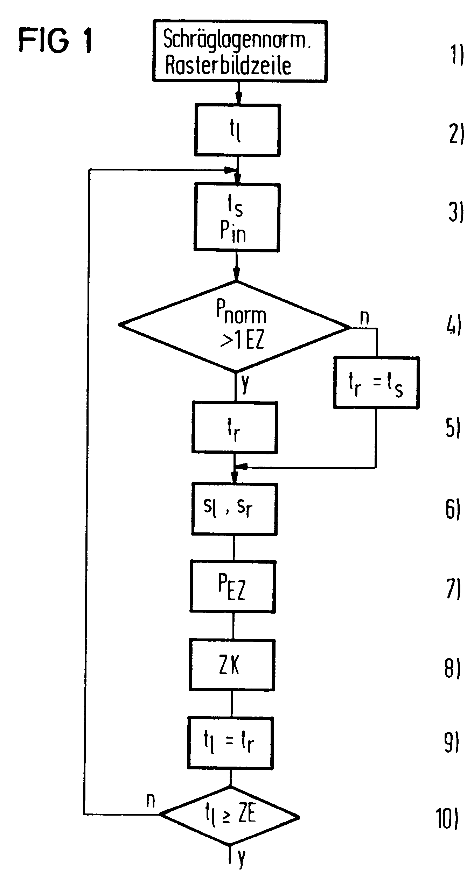

Das erfindungsgemäße Verfahren wird im folgenden anhand von Flußdiagrammen in Verbindung mit mehreren Rasterbilddarstellungen näher erläutert. Dabei zeigen
- FIG 1: das Flußdiagramm für den gesamten Zeichentrennungsprozeß gemäß der Erfindung,
- FIG 2: einen ersten Teilprozeß - Grobtrennung - innerhalb des Prozesses gemäß FIG 1,
- FIG 3: einer zweiten Teilprozeß - Feintrennung - innerhalb des Prozesses gemäß FIG 1,
- FIG 4 bis FIG 9: einzelne Rasterbilddarstellungen im Laufe des Zeichentrennungsprozesses.

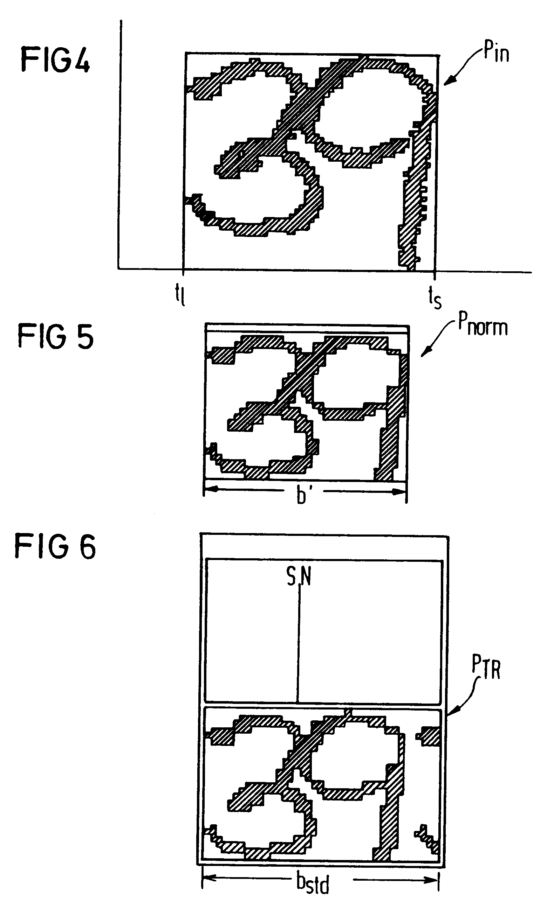

In den Flußdiagrammen sind die einzelnen Verfahrensabschnitte fortlaufend durchnumeriert und stellen sich im einzelnen wie folgt dar.
1) Ausgangspunkt für den Zeichentrennungsprozeß ist eine schräglagennormierte Rasterbildzeile mit mehreren in Hand- oder Maschinenschrift vorliegenden Einzelzeichen, die wenigstens zum Teil gegenseitig überlappend und/oder verklebt sind.
2) Am Zeilenanfang der Rasterbildzeile wird die dem linken Rand des ersten Zeichens nächstliegende Weißspalte als linke Trennspalte tₗ markiert.
3) Ein im Verlauf der Rasterbildzeile auftretender Weißspaltenbereich wird als nächste sichere rechte Trennspalte tₛ erkannt und der zwischen der linken Trennspalte tₗ und der nächsten sicheren rechten Trennspalte tₛ liegende Bildzeilenbereich Pᵢₙ extrahiert (siehe auch FIG 4).
4) Der Bildzeilenbereich Pᵢₙ wird in zweidimensionaler Normierung auf ein Normbild Pₙₒᵣₘ mit fest vorgegebener Höhe und entsprechend angepaßter Breite b' gewandelt (siehe FIG 5). Außerdem wird untersucht, ob im Normbild Pₙₒᵣₘ mehr als ein Zeichen enthalten ist.
5) Wenn das Normbild Pₙₒᵣₘ mehr als ein Zeichen enthält, wird mit Hilfe eines Trennklassifikators in einem Grobtrennungsprozeß eine rechte Trennspalte tᵣ bestimmt. Als Trennklassifikator kann z.B. ein Klassifikator mit Merkmalsbildung nach dem sogenannten Winkelschnittanalyse-Verfahren (siehe EP-0 047 512) oder eine Basisklassifikator-Kaskade nach EP-0 111 930 verwendet werden. Für den Fall, daß im Normbild Pₙₒᵣₘ nur ein einziges Zeichen enthalten ist, entfällt der Grobtrennungsprozeß, weil als rechte Trennspalte tᵣ automatisch die bereits ermittelte nächste sichere Trennspalte tₛ bestimmt wird.
6) Nach Ermittlung der rechten Trennspalte tᵣ erfolgt ein Feintrennungsprozeß, bei dem in der Umgebung der linken und rechten Trennspalte tₗ, tᵣ jeweils Trennwege sₗ, sᵣ gesucht werden.
7) Der zwischen den Trennwegen sₗ und sᵣ liegende Pixelzeichenbereich wird als Einzelzeichen-Rasterbild P_{EZ} extrahiert.
8) Für das Einzelzeichen-Rasterbild P_{EZ} wird in einem Zeichen-Klassifikator die entsprechende Bedeutungsklasse bestimmt.
9) Die im Verfahrensschritt 6) ermittelte rechte Trennspalte tᵣ wird zur neuen linken Trennspalte tₗ', mit der, sofern in
10) nicht das Zeilenende der Rasterbildzeile signalisiert wird, ein erneuter Trennungsprozeß, beginnend mit dem Verfahrensschritt 3) und einem neuen nach rechts verschobenen Bildzeilenbereich eingeleitet wird.

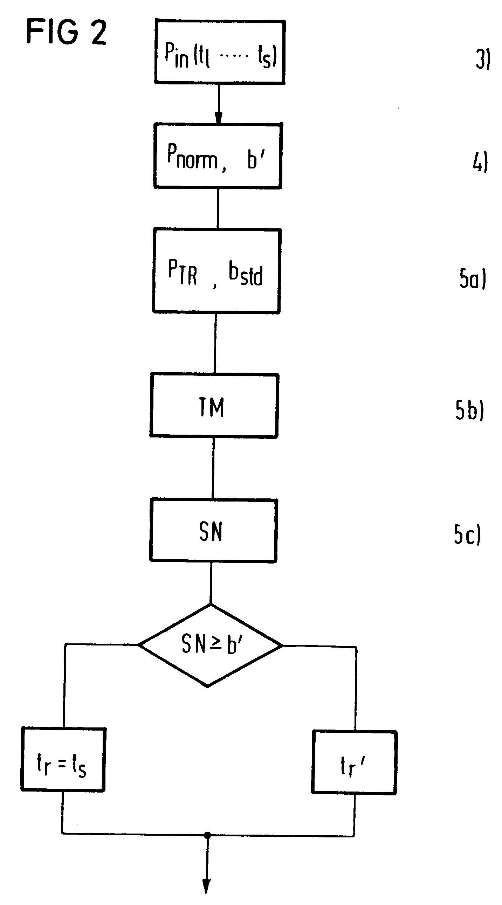

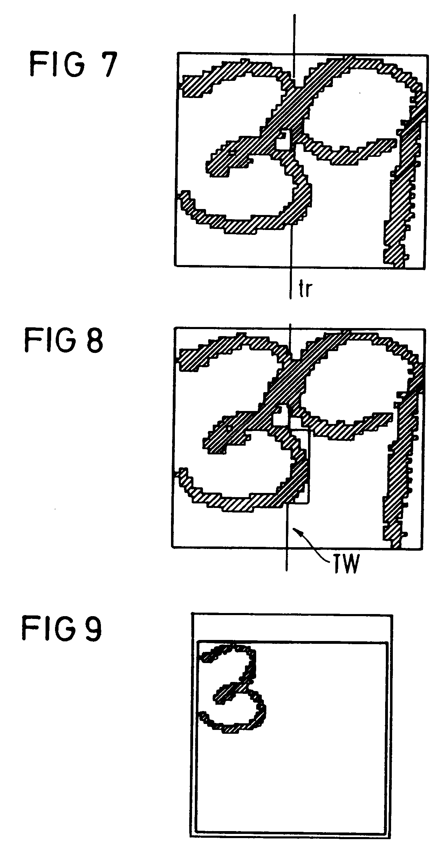

Der Grobtrennungsprozeß gemäß Ziffer 5 wird im folgenden anhand des Flußdiagramms nach FIG 2 beschrieben.
5a) Ausgehend von dem gemäß Ziffer 4) erzeugten Normbild Pₙₒᵣₘ der Breite b' (siehe auch FIG 5) wird ein Trennbild P_{TR} der Standardbreite b_{std} erzeugt, das durch Abschneiden des rechten Randbereiches Pₙₒᵣₘ - falls b' ≧ b_{std} - bzw. - falls b'< b_{std} durch teilweise oder vollständige, gegebenenfalls mehrfache Wiederholung des Normbildes Pₙₒᵣₘ realisiert wird. Bei dem in FIG 6 dargestellten Beispiel ist die Standardbreite b_{std} des Trennbildes P_{TR} etwas größer gewählt als die Breite b' des Normbildes Pₙₒᵣₘ, weshalb am rechten Bildrand noch Randbereiche der wiederholt dargestellten Zahl "3" erkennbar sind.
5b) Aus dem Rasterbildmuster des Trennbildes P_{TR} werden in einem Trennklassifikator verschiedene Trennmerkmale TM berechnet.
5c) Die errechneten Trennmerkmale TM werden mit Hilfe des speziellen Trennklassifikators einem Klassifikations-Algorithmus unterworfen. Als Trennklassifikator kann z.B. eine Basisklassifikator-Kaskade, gegebenenfalls mit zusätzlicher Belehrung, verwendet werden. Das Ergebnis dieser Trennklassifikation ist eine Spaltennummer SN der wahrscheinlichsten Trennspalte tᵣ (siehe FIG 7). Würde man diese wahrscheinliche Trennspalte tᵣ tatsächlich als möglichen Trennweg in Betracht ziehen, dann würden die Zahlen "3" und "9" im oberen verklebten Bereich an einer durchaus richtigen Stelle durchschnitten, andererseits würden im unteren Bereich Teile der Zahl "3" abgetrennt und der Zahl "9" zugeordnet. Eine Klassifizierung der teils verstümmelten, teils durch Fremdzeichenbestandteile überfrachteten Einzelzeichen wird dadurch erheblich erschwert, wenn nicht gar völlig unmöglich.

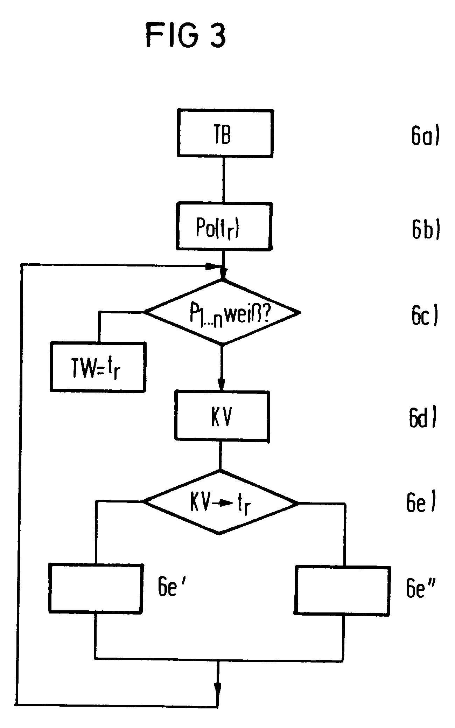

Für den dem Grobtrennungsprozeß folgenden Feintrennungsprozeß, dessen Flußdiagramm in FIG 3 dargestellt ist, ergeben sich folgende Teilprozesse, wobei die nachstehenden Ausgangsparameter berücksichtigt werden.
I. Die schräglagennormierte Rasterbildzeile, aus der der für den aktuellen Trennvorgang relevante Bildzeilenbereich Pᵢₙ (siehe FIG 4) extrahiert wird.
II. Die Spaltennummer SN der Trennspalte als Ergebnis des des Grobtrennungsprozesses.
III. Der Abstand der Trennspalte von der vorhergehenden Trennspalte.
IV. Der Abstand der Trennspalte von der nächsten sicheren Trennspalte (Weißweg).

6a) Zu beiden Seiten der vom Grobtrennungsprozeß vorgegebenen Trennspalte tᵣ wird ein Trennbereich TB bestimmt, dessen Breite von der Höhe der schräglagennormierten Rasterbildzeile und von den unter III. und IV. angegebenen Parametern abhängig ist.
6b) Als Startpunkt für den Feintrennungsprozeß dient das oberste Pixel Po der Trennspalte tᵣ.
6c) Es wird geprüft ob die folgenden Pixel Pl...n längs der Trennspalte weiß sind oder nicht. Bei einer durchgehenden weißen Trennspalte ist diese identisch mit dem gesamten Trennweg. Der Trennungsprozeß ist damit abgeschlossen. Im anderen Fall, d.h. bei Auftreten des ersten Schwarzpixels längs der Trennspalte wird der folgende Teilprozeß eingeleitet.
6d) Innerhalb des durch 6a) vorgegebenen Trennbereichs wird versucht, den Schwarzbereich zu umgehen - Konturverfolgung KV.
6e) Es wird untersucht, ob die lokale Konturverfolgung zu einer tieferen Stelle der Trennspalte zurückführt. Tritt dieser Fall ein (6e'), dann bildet der gefundene Umgehungsweg einen Teilabschnitt des Trennweges TW. Andernfalls (6e'') wird der Schwarzbereich längs der Trennspalte bis zum ersten Weißpixel unterhalb dieses Schwarzbereiches durchschnitten. Die Teilprozesse 6c) bis 6e) werden solange fortgesetzt, bis das untere Ende der Trennspalte erreicht ist (siehe FIG 8).
7) Nach Beendigung des Feintrennungsprozesses erfolgt die endgültige Extrahierung des Einzelzeichens (siehe FIG 9).

## Patentansprüche

1. Verfahren zur Extrahierung von Einzelzeichen aus Rasterbildvorlagen einer gelesenen hand- oder maschinenschriftlichen Zeichenfolge freier Teilung, **gekennzeichnet durch** folgende Verfahrensschritte:
a) Aus der Rasterbildzeile wird, ausgehend von einer linken Trennspalte durch Vorgabe der jeweils nächsten sicheren rechten Trennspalte (tₛ) ein Bildzeilenbereich (Pᵢₙ) extrahiert.
b) Der Bildzeilenbereich (Pᵢₙ) wird in zweidimensionaler Normierung in ein Normbild (Pₙₒᵣₘ) mit fest vorgegebener Höhe und entsprechend angepaßter Breite (b') gewandelt.
c) Aus dem Normbild (Pₙₒᵣₘ) wird ein Trennbild (P_{TR}) mit standardisierter Breite (b_{std}) erzeugt, derart, daß entsprechend dem Verhältnis von angepaßter Breite (b') und standardisierter Breite (b_{std}) umgekehrt proportionale Anteile des Normbildes in das Trennbild übernommen werden.
d) Mit Hilfe eines Trennklassifikators werden für das Trennbild (P_{TR}) pro Spalte jeweils bildmusterspezifische Trennwerte errechnet und die den maximalen Trennwert aufweisende Spalte als rechte Trennspalte (tᵣ) bestimmt.
e) Ausgehend von der vom Trennklassifikator vorgegebenen Trennspalte (tᵣ) wird, beginnend mit dem oberen Bildpunkt der Trennspalte ein Trennweg gesucht, der innerhalb eines zu beiden Seiten der Trennspalte liegenden Trennbereichs bei fehlender Weißspalte teils durch Konturverfolgung und, sofern durch Konturverfolgung kein Weißweg gefunden werden kann, teils durch Zwangstrennung entlang der Trennspalte gebildet wird.

2. Verfahren nach Anspruch 1,
**dadurch gekennzeichnet**, daß die Breite des zu beiden Seiten der Trennspalte (tᵣ) bestimmten Trennbereiches von der Höhe der Rasterbildzeile, vom Abstand der Trennspalte, von der vorhergehenden Trennspalte und vom Abstand der Trennspalte von der nächsten sicheren Trennspalte abhängig ist.

## Claims

1. Method for extracting individual characters from raster images of a read-in handwritten or typed character sequence having a free pitch, characterized by the following method steps:
a) Starting from a left-hand separation column, an image line region (Pᵢₙ) is extracted from the raster image line by presetting the respectively next reliable right-hand separation column (tₛ).
b) The image line region (Pᵢₙ) is converted using two-dimensional normalization into a normalized image (Pₙₒᵣₘ) having a fixedly predetermined height and a correspondingly matched width (b').
c) A separation image (P_{TR}) having a standardized width (b_{std}) is produced from the normalized image (Pₙₒᵣₘ) in such a manner that inversely proportional components of the normalized image are transferred into the separation image in accordance with the ratio of the matched width (b') to the standardized width (b_{std}).
d) With the aid of a separation classifier, image-pattern-specific separation values are calculated in each case per column for the separation image (P_{TR}), and the column having the maximum separation value is defined as the right-hand separation column (tᵣ).
e) On the basis of the separation column (tᵣ) predetermined by the separation classifier, an attempt is made, starting from the upper pixel of the separation column, to find a separation path which, in the absence of a white column, is formed within a separation region, which is located on both sides of the separation column, partially by contour tracing and, if no white path can be found by contour tracing, partially by forced separation along the separation column.

2. Method according to Claim 1, characterized in that the width of the separation region defined on both sides of the separation column (tᵣ) is dependent on the height of the raster image line, on the distance of the separation column from the preceding separation column, and on the distance of the separation column from the next reliable separation column.

## Revendications

1. Procédé pour extraire des caractères individuels à partir d'originaux d'images de trame d'une suite de caractères manuscrits ou tapés par une machine, lus, disposés selon un pas de répartition libre, caractérisé par les étapes opératoires suivantes :
a) une zone de lignes d'image (Pᵢₙ) est extraite de la ligne de l'image de trame, à partir d'une colonne de séparation de gauche, par prédétermination de la colonne de séparation de droite sûre et immédiatement suivante (tₛ),
b) la zone de lignes d'image (Pᵢₙ) est convertie, au moyen d'une normalisation bidimensionnelle, en une image normalisée (Pₙₒᵣₘ) possédant une hauteur prédéterminée de façon fixe et une largeur (b') adaptée de façon correspondante,
c) une image de séparation (P_{TR}) possédant une largeur standardisée (b_{stb}) est produite à partir de l'image normalisée (Pₙₒᵣₘ) de sorte que, conformément au rapport de la largeur adaptée (b') et de la largeur standardisée (b_{std}), des composantes inversement proportionnelles de l'image normalisée sont transférées dans l'image de séparation,
d) à l'aide d'un dispositif de classement de séparation, respectivement des valeurs de séparation spécifiques au modèle d'image sont calculées pour l'image de séparation (P_{TR}), pour chaque colonne, et la colonne possédant la valeur de séparation maximale est déterminée comme étant la colonne de séparation de droite (tᵣ),
e) à partir de la colonne de séparation (tᵣ) prédéterminée par le dispositif de classement de séparation, un trajet de séparation est recherché à partir du point d'image supérieur de la colonne de séparation, trajet de séparation qui est formé à l'intérieur d'une zone de séparation située des deux côtés de la colonne de séparation, dans le cas de l'absence d'une colonne blanche, en partie au moyen d'un suivi de contour et, dans la mesure où aucun trajet blanc ne peut être trouvé au moyen du suivi de contour, en partie par une séparation forcée le long de la colonne de séparation.

2. Procédé suivant la revendication 1, caractérisé par le fait que la largeur de la zone de séparation, déterminée des deux côtés de la colonne de séparation (tᵣ), dépend de la hauteur des lignes de l'image de trame, de la distance des colonnes de séparation, de la colonne de séparation précédente et de la distance entre la colonne de séparation et la colonne de séparation sûre immédiatement suivante.
